# EUROPÄISCHE PATENTSCHRIFT

(11) **EP 0 792 792 B1**
(45) Veröffentlichungstag und Bekanntmachung des Hinweises auf die Patenterteilung: **07.08.2002**
(21) Anmeldenummer: 97103379.0
(22) Anmeldetag: 28.02.1997
(51) Int. Cl.: B62D 51/04, B60L 15/00

(54) **Fahrtgeber für ein von einem Motor angetriebenes Mitgeh-Flurförderzeug**
Speed controller for a motor-driven pedestrian truck
Commande de vitesse pour un chariot de transport à moteur avec conducteur marchant

(30) Priorität: 01.03.1996 DE 19607976
(43) Veröffentlichungstag der Anmeldung: 03.09.1997
(73) Patentinhaber: Jungheinrich Aktiengesellschaft, 22047 Hamburg (DE)
(72) Erfinder: Kube, Matthias, Dipl.-Ing., 22850 Norderstedt (DE); Baginski, Ralf, Dipl.-Ing., 21398 Neetze (DE); Eggert, Nikolaus, Dipl.-Ing., 22589 Hamburg (DE)
(74) Vertreter: Patentanwälte Hauck, Graalfs, Wehnert, Döring, Siemons

(56) Entgegenhaltungen:
- EP-A- 0 253 333
- DE-A- 19 614 411
- DE-B- 1 239 573
- DE-U- 9 311 075

## Beschreibung

Die Erfindung bezieht sich auf ein von einem Motor angetriebenes Mitgeh-Flurförderzeug mit Deichsel nach dem Patentanspruch 1.

Ein Mitgeh-Flurförderzeug mit Lenkdeichsel ist etwa aus der DE 12 39 573 bekannt geworden. Die Deichsel ist an einem Lenkschemel um eine horizontale Achse angelenkt und kann zwischen einer senkrechten Stellung, in der gleichzeitig über eine geeignete Vorrichtung die Bremse betätigt ist und einer demgegenüber geschwenkten Stellung bewegt werden, wobei in letzterer das Fahrzeug gelenkt und betrieben werden kann. Für den Fahr- und Ladebetrieb ist eine geeignete Steuervorkehrung in einem Kopf am freien Ende der Deichsel vorgesehen. Sie umfasst u.a. einen Fahrschalter, dessen Betätigungsrichtung die Fahrtrichtung vorgibt, wobei das Ausmaß der Betätigung zugleich die Fahrgeschwindigkeit bestimmt.

Aus der DE 27 51 333 ist auch bekannt, die Lenkdeichsel am oberen Ende einer Lenkwelle anzubringen, die sich durch das Gehäuse des Antriebsteils vertikal nach unten erstreckt zu einem Bock oder Schemel für das Lenkrad, das in den meisten Fällen auch gleichzeitig angetrieben ist. Bei derartigen Lenkdeichseln ist bekannt, diese um eine horizontale Achse so weit zu schwenken, dass auch von einer Standfläche des Flurförderzeugs aus eine Lenkung und Betätigung des Fahrzeugs mit Hilfe der Deichsel möglich ist.

Aus der DE 27 54 102 ist eine Deichsel für ein Mitgeh-Fahrzeug bekannt geworden, die so ausgestaltet ist, dass die Deichsel bei im Wesentlichen gleicher Höhe bleibendem Steuerkopf ohne Überwindung des nennenswerten Widerstandes verkürzbar ist, wobei das Maß der Verkürzung der gesamten Länge der Deichsel entsprechen kann. Dadurch ist ausgeschlossen, dass die Bedienungsperson bei Einwärtsdrehung des Steuerkopfes zum Fahrzeug hin die Deichsel in eine Stellung hochklappt, in welcher der Sicherheitsschalter frei wird bzw. der Steuerkopf so weit verschwenkt wird, dass der Sicherheitsschalthebel aus seiner Beaufschlagungshöhe herausgeschwenkt wird.

Aus der DE 38 32 581 ist eine Lenkdeichsel für Flurförderzeuge bekannt geworden, bei der im Lenkkopf Fahrtrichtungs- und Geschwindigkeitsschalter sowie ein stirnseitiger Sicherheitsschalter angeordnet sind. Trifft die Deichsel mit dem freien Ende gegen einen Widerstand, der auch von einer Bedienungsperson gebildet sein kann, dann löst der Sicherheitsnotschalter die Bremsung aus, so dass die Bedienungsperson von dem Fahrzeug nicht überfahren werden kann.

Aus DE 37 16 375 ist ein deichselgerührtes motorangetriebenes Fahrzeug bekannt geworden, bei dem die Deichsel im Bereich des Handgriffs zur Steuerung des Antriebsmotors ein willkürlich betätigbares Schalterbetätigungsorgan aufweist. Zu diesem Zweck kann der Handgriff zusammen mit dem Deichselende verschieblich geführt sein, wobei die Bewegungsrichtung von einem geeigneten Schalter erfasst wird und dadurch die Fahrtrichtung des Fahrzeugs vorgibt. Bei dieser Vorkehrung soll verhindert werden, dass beim Aufnehmen der Deichsel aus der abgesenkten Lage oder bei einem Absenken aus einer hochgeklappten Lage die Betätigungsorgane für den Fahrantrieb beim Ergreifen des Handgriffs ungewollt betätigt werden und den Fahrantrieb einschalten.

Aus DE-U-93 11 075 ist ein Golfcaddy bekannt geworden mit einem Hilfsantrieb, der eingeschaltet wird, wenn die zum Bewegen des Golfcaddys erforderliche Kraft einen bestimmten Wert überschreitet. Hierzu ist eine Kraftmesseinrichtung vorgesehen, welche die zwischen Handgriff und Fahrzeug wirkende Kraft misst. Dadurch wird dem Bediener erspart, beim Ziehen oder Schieben des Fahrzeugs selbst eine größere Kraft aufwenden zu müssen.

Der Erfindung liegt die Aufgabe zugrunde, ein von einem Motor angetriebenes Mitgeh-Flurförderzeug mit Deichsel zu schaffen, das dem Bediener ein "direktes" Gefühl zu dem Fahrzeug vermittelt ohne störende Bedienung eines Fahrschalters.

Diese Aufgabe wird durch die Merkmale des Patentanspruchs 1 gelöst.

Bei der Erfindung wurde erkannt, dass der Drehweg eines Fahrschalters, wie er normalerweise verwendet wird, sich in Abhängigkeit vom Kippweg der Deichsel verändert. Bei der Bedienung des Fahrzeugs muss der Fahrer ständig die gewünschte Leistung in eine Drehbewegung der Hand umsetzen. Dies ist in besonders kritischen Fahrsituationen von Nachteil, wenn der Fahrer das rollende Fahrzeug durch "Festhalten" oder "Wegschieben" versucht zu bremsen anstatt den Fahrschalter zu betätigen und die Antriebsrichtung umzukehren.

Bei der erfindungsgemäßen Lösung ist eine Kraftmesseinrichtung vorgesehen, die abhängig von der Betätigungsrichtung der Deichsel und der auf die Deichsel aufgebrachten Zug- oder Schubkraft ein Signal erzeugt. Nach Maßgabe des von der Kraftmesseinrichtung erzeugten Signals werden die Drehrichtung und Drehzahl des Antriebsmotors eingestellt.

Durch die erfindungsgemäße Ausbildung einer Mitgeh-Lenkdeichsel kann dem Bediener ein ähnliches Gefühl vermittelt werden wie bei einem deichselgelenkten Wagen ohne eigenen Antrieb. Die Kraftmesseinrichtung ermittelt die vom Bediener auf die Deichsel und damit auf das Flurförderzeug ausgeübten Zug- oder Druckkräfte und verwandelt sie in ein für die Antriebssteuerung geeignetes Signal. Eine Regelvorrichtung wertet das Signal nach Betrag und Richtung aus und schaltet ausreichend verstärkte Stellsignale auf den Antriebsmotor. Somit ist eine Regelung geschaffen, die so ausgelegt werden kann, dass auf einem ergonomisch "angenehmen" Niveau eine lastabhängige, kraftabhängige und geschwindigkeitsabhängige Zug- und Druckkraftregelung möglich wird.

Die maximale Geschwindigkeit von derartigen Flurförderzeugen ist gesetzlich bei 6 km/h begrenzt, um die Stolpergefahr und das Auffahren auf den Bediener zu verhindern. Daher ist bekannt, wie oben erwähnt, einen Notschalter an der Deichsel anzubringen, der das Einklemmen des Bedieners zwischen Fahrzeug und Hindernis verhindert. Mit der Erfindung liegt ein Fahrtgeber vor, durch den ein separater Notschalter nicht erforderlich ist, da zum Beispiel ein Rückwärtsfahren des Fahrzeugs gegen den Bediener über die Kraftmesseinrichtung zu einer Fahrtrichtungsumkehr führt und daher ein Auffahren verhindert.

Es sind verschiedene Möglichkeiten denkbar, eine Kraftmesseinrichtung anzubringen. Eine besteht nach einer Ausgestaltung der Erfindung darin, dass sie zwischen Deichsel und Fahrzeug angeordnet ist.

Eine Ausgestaltung dieser Kraftmesseinrichtung weist eine Führung auf, die nur Zugoder Druckkräfte in Deichsellängsrichtung aufnimmt und auch nur in dieser Führung Verschiebungen zulässt, die proportional auf einen Signalgeber (Potentiometer, DMS, Hall-Sensor, etc.) gehen. Dieser Signalgeber gibt das der Zug- bzw. Druckkraft proportionale Signal an die Regeleinrichtung. Diese stellt entsprechend der Richtung und des Betrages des Signals die Motorleistung ein, so dass das Fahrzeug die Zugbzw. Druckkraft des Bedieners verringern kann. Somit ist ein Regelkreis geschlossen.

Eigenschaften dieses Regelkreises lassen sich mechanisch in dem Sensor der Kraftmesseinrichtung oder elektronisch realisieren. Diese Eigenschaften für den Bediener sind die Einstellbarkeiten von Lastabhängigkeiten, der Zug- oder Druckkraft und der Geschwindigkeitsabhängigkeit. Außerdem werden das Ansprechverhalten und das Kraftniveau festgelegt.

Mechanisch werden diese Eigenschaften durch gezielte Auslegung einer Vorspannung um die Ruhelage erreicht. Auch der Einsatz von definierter Reibung kann die oben erwähnten Möglichkeiten berücksichtigen.

Elektronisch sieht eine Beeinflussung des Systems seitens des Bedieners eine "Änderung" von abgelegten Kennlinien in der Regeleinrichtung vor. Diese Kennlinien stellen einen gewünschten Zusammenhang zwischen zwei Größen dar. Diese Größen können in diesem Fall Zugkraft-Geschwindigkeit, Zugkraft-Last oder Geschwindigkeit-Last sein.

Die Erfindung wird nachfolgend anhand einer Zeichnung näher erläutert.
- Fig. 1: zeigt äußerst schematisch ein Flurförderzeug nach der Erfindung.
- Fig. 2: zeigt ein Blockschaltbild für einen Regelkreis im Flurförderzeug nach der Erfindung.

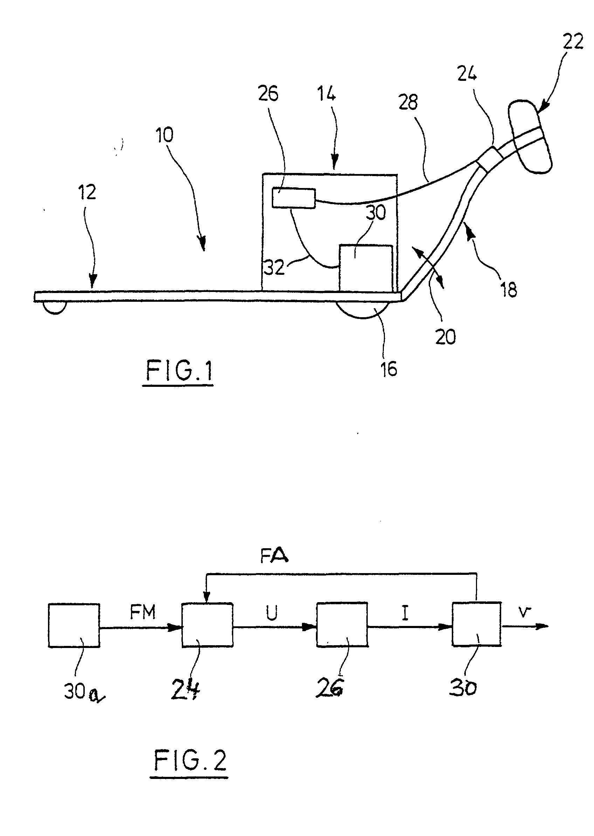

In Fig. 1 ist mit 10 ein Flurförderzeug bezeichnet, das einen Lastaufnahmeteil 12 und einen Antriebsteil 14 aufweist. Ein Antriebsrad 16 ist in einem Drehschemel drehbar gelagert und von einem Elektromotor, der von einer Batterie gespeist wird, angetrieben. Mit dem Lenkschemel ist eine Lenkdeichsel 18 verbunden, die um eine horizontale Achse schwenkbar ist, wie durch den Doppelpfeil 20 angedeutet. Am freien Ende der Deichsel ist ein Handgriff 22 angeordnet, der zum Beispiel Betätigungstasten oder dergleichen für den Hub- und Senkbetrieb aufweist.

Der Deichsel 18 ist ferner eine Kraftmesseinrichtung 24 zugeordnet, die die zwischen Deichsel und Flurförderzeug 10 wirkende Kraft misst, mit der ein Bediener an der Deichsel 18 zieht bzw. auf die Deichsel schiebend einwirkt. Das Signal der Kraftmesseinrichtung 24 wird auf eine Regelvorrichtung 26 im Antriebsteil 14 gegeben, beispielsweise über eine geeignete Leitung 28. Die Regelvorrichtung 26 wandelt das Vorzeichen und die Größe des von der Kraftmesseinrichtung 24 gehaltenen Signals in ein Stellsignal für den Antriebsmotor 30 um, wobei das Stellsignal über eine Leitung 32 zum Motor 30 übertragen wird.

In Fig. 2 gibt der Block 30a den Bediener an, der eine Kraft FM auf die Deichsel ausübt. 24 ist die Kraftmesseinrichtung, die die Kraft misst und eine Steuerspannung U erzeugt, die auf die Regelvorrichtung 26 gegeben wird zur Erzeugung eines Stellsignals I für den Motor 30, der das Fahrzeug mit der Geschwindigkeit v antreibt. Die Motorkraft FA wird, wie gezeigt, auch auf die Kraftmesseinrichtung rückgekoppelt, die somit eine Differenzbildung beider Kräfte vornimmt.

Mit Hilfe der Kraftmesseinrichtung 24 wird kraftabhängig der Motor 30 betätigt. Dadurch erfolgt eine Nachführsteuerung, die dem Bediener das gleiche Gefühl verleiht wie bei einem Ziehen oder Schieben an einem Deichselfahrzeug ohne eigenen Antrieb. Die Regelvorrichtung 26 wertet das erhaltene Signal nach einem vorgegebenen Algorithmus aus, um die gewünschte Verstellung der Fahrmotorleistung zu erhalten.

Die gezeigte Vorrichtung lässt eine ergonomische Bedienung der Deichsel zu. Ähnlich wie bei einer Lenkhilfe kann eine sogenannte Zughilfe erhalten werden, wobei ein Anfahren direkter oder weicher je nach Wunsch erhalten werden kann.

Außerdem kann in einer Notsituation, zum Beispiel beim schnellen Reversieren (Fahrtrichtungsumkehr), eine Bremse angesteuert werden, so dass das Fahrzeug sofort stehen bleibt.

Es ist denkbar, die für eine bestimmte Fahrgeschwindigkeit erforderliche Zug- bzw. Druckkraft einstellbar vorzusehen.

Außerdem ist es möglich, das Fahrverhalten weitgehend unabhängig vom Beladungszustand zu realisieren.

Auch eine Geschwindigkeitsabhängigkeit der Zugkraft kann über ein entsprechendes Geschwindigkeitssignal in der Regelvorrichtung berücksichtigt werden, so dass ein optimales Fahrgefühl erzeugt werden kann.

Die Kraftmesseinrichtung kann eine Führung aufweisen, welche eine Verschiebung der Deichsel in Längsrichtung ermöglicht, wobei an der Deichsel Federmittel zwecks Einstellung der Deichsel in eine neutrale Betriebs position angreifen.

Der Handgriff kann in Zug-und Druckrichtung der Deichsel bewegbar sein und die Kraftmesseinrichtung zwischen Handgriff und Deichsel angeordnet sein.

## Patentansprüche

1. Mitgeh-Flurflörderzeug mit einer um eine horizontale Achse schwenkbar an einer Lenkwelle oder einem Lenkschemel angelenkten Deichsel (18),
einem elektrischen Antriebsmotor (30) und
einer Kraftmesseinrichtung (24), die die zwischen Deichsel (18) und Flurförderzeug (10) wirkende Kraft misst und ein von der Richtung und der Höhe der aufgebrachten Zug- und Schubkraft abhängiges Signal erzeugt, wobei
die Kraftmesseinrichtung (24) mit einer nach einem vorgegebenen Algorithmus arbeitenden elektronischen Regelvorrichtung (26), die nach Maßgabe des von der Kraftmesseinrichtung erzeugten Signals (U) ein Stellsignal (I) für den Antriebsmotor (30) erzeugt, als Fahrtgeber für das Flurförderzeug (10) dient.

2. Flurförderzeug nach Anspruch 1, **dadurch gekennzeichnet, dass** am freien Ende der Deichsel (18) ein Handgriff (22) vorgesehen ist, der in Zug- und Druckrichtung der Deichsel (18) bewegbar ist und die Kraftmesseinrichtung (24) zwischen Handgriff (22) und Deichsel (18) angeordnet ist.

3. Flurförderzeug nach Anspruch 1 oder 2, **dadurch gekennzeichnet, dass** das Signal (U) elektronisch in der Regelvorrichtung (26) nach Maßgabe eines Signals für die Last bzw. die Geschwindigkeit des Flurförderzeugs modifiziert wird.

4. Flurförderzeug nach einem der Ansprüche 1 bis 3, **dadurch gekennzeichnet, dass** die Kraftmesseinrichtung (24) eine Führung aufweist, welche eine Verschiebung der Deichsel (18) in Längsrichtung ermöglicht und an der Deichsel (18) Federmittel angreifen zwecks Einstellung der Deichsel in eine neutrale Betriebsposition.

## Claims

1. Trolley having a steering pole (18) linked and adapted to be swivelled about a horizontal axis, an electric motor (30) and force sensor means (24) which measures the force between the pole (18) and the trolley (10), generates a signal which is proportional to the tension and thrust force of the sensor means (24) together with electronic feed back control means (24) working after a predetermined algorithm and generating a setting signal (I) for the motor (30) in accordance with the signal (U) of the force sensor means (24) serves as motion controller for the trolley (10).

2. The trolley of claim 1, wherein the steering pole (18) has a free end, the free end of the steering pole (18) is provided with a handle (22) that can be moved in thrust and tension direction of the pole (18) and the sensor means (24) are located between the handle (22) and the steering pole (18).

3. The trolley of claim 1 or 2, wherein the signal (U) is modulated electronically in the feed back control means (26) as a function of a signal proportional to the load or the speed of the trolley.

4. The trolley of one of the claims 1 to 3, wherein the force sensor means (24) has guide means allowing displacement of the pole (18) in the longitudinal direction thereof and spin means engage the pole (18) in order to bring the pole in a neutral operating position.

## Revendications

1. Chariot de manutention à accompagnement à pied comportant un timon (18) articulé à un arbre de direction ou une traverse de direction en pouvant pivoter autour d'un axe horizontal,
un moteur électrique d'entraînement (30) et
un dispositif de mesure de force (24), qui mesure la force s'exerçant entre le timon (18) et le chariot de manutention (10) et produit un signal dépendant de la direction et de la grandeur de la force de traction et de poussée appliquée,
le dispositif de mesure de force (24) comportant un dispositif de réglage électronique (26) travaillant selon un algorithme donné et produisant selon le signal (U) produit par le dispositif de mesure de force un signal de commande (I) pour le moteur d'entraînement (30), ce dispositif servant de capteur de déplacement pour le chariot de manutention (10).

2. Chariot de manutention selon la revendication 1, **caractérisé en ce qu'**il est prévu à l'extrémité libre du timon (18) une poignée (22) qui est mobile en direction de traction et de poussée du timon (18) et le dispositif de mesure de force (24) est placé entre la poignée (22) et le timon (18).

3. Chariot de manutention selon la revendication 1 ou 2, **caractérisé en ce que** le signal (U) est modifié électroniquement dans le dispositif de réglage (26) selon l'indication d'un signal pour la charge et la vitesse du chariot de manutention.

4. Chariot de manutention selon l'une des revendications 1 à 3, **caractérisé en ce que** le dispositif de mesure de force (24) comporte un guidage qui permet un déplacement du timon (18) dans la direction longitudinale et **en ce que** sur le timon (18) des moyens élastiques agissent en vue du réglage du timon dans une position de fonctionnement neutre.
